(19)

Europäisches Patentamt
European Patent Office
Office européen des brevets

(11) **EP 3 920 108 A1**

(12) **EUROPEAN PATENT APPLICATION**
published in accordance with Art. 153(4) EPC

(43) Date of publication:
**08.12.2021 Bulletin 2021/49**

(21) Application number: **20912840.4**

(22) Date of filing: **28.10.2020**

(51) Int Cl.:
**G06N 99/00** (2019.01)

(86) International application number:
**PCT/CN2020/124440**

(87) International publication number:
**WO 2021/139333 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.01.2020  CN 202010027656**

(71) Applicant: **TENCENT TECHNOLOGY (SHENZHEN) COMPANY LIMITED**
**Shenzhen, Guangdong 518057, (CN)**

(72) Inventors:
• **CHEN, Yuqin**
**Shenzhen, Guangdong 518057, (CN)**
• **HSIEH, Changyu**
**Shenzhen, Guangdong 518057, (CN)**
• **CHEN, Yu**
**Shenzhen, Guangdong 518057, (CN)**
• **ZHANG, Shengyu**
**Shenzhen, Guangdong 518057, (CN)**

(74) Representative: **Eisenführ Speiser**
**Patentanwälte Rechtsanwälte PartGmbB**
**Postfach 10 60 78**
**28060 Bremen (DE)**

(54) **METHOD AND APPARATUS FOR PREDICTING ADIABATIC EVOLUTION PATH, DEVICE, AND STORAGE MEDIUM**

(57)    The present application relates to the field of artificial intelligence, and provides a method and apparatus for predicting an adiabatic evolution path, a device, and a storage medium. The method comprises: obtaining a target Hamiltonian H1 of a quantum computing problem; determining an initial Hamiltonian H0 and a target ground state energy E1 according to the target Hamiltonian HI; converting the adiabatic evolution path searching for the target ground state energy E1 from the initial Hamiltonian H0 into a chessboard game; solving an optimal chessboard path of the chessboard game by using Monte Carlo tree search in combination with a neural network; and outputting the adiabatic evolution path according to the optimal chessboard path. In the present application, for reconstruction of a three-dimensional face mesh of a mobile terminal, when there are a plurality of candidate actions for each state in an adiabatic evolution path, a stable convergent adiabatic evolution path can still be quickly and efficiently solved.

FIG. 1

**Description**

This application claims priority to Chinese Patent Application No. 202010027656.8, entitled "METHOD AND APPARATUS FOR PREDICTING ADIABATIC EVOLUTION PATH, DEVICE, AND STORAGE MEDIUM" filed on January 10, 2020, which is incorporated herein by reference in its entirety.

FIELD

Embodiments of this application relate to the field of machine learning of artificial intelligence, and particularly, to a method and apparatus for predicting an adiabatic evolution path, a device, and a storage medium.

BACKGROUND

Adiabatic quantum computation involves a theoretical model for implementing a quantum computer. The adiabatic quantum computation is implemented by converting a computation problem into realizing a physical process, and an answer to the computation problem is reflected by a ground state of a target Hamiltonian.
A computation process of the adiabatic quantum computation is implemented by adiabatically evolving from an initial Hamiltonian (H0), of which a ground state is easily provided, to a target Hamiltonian (HI). The evolution process is referred to as an adiabatic evolution path. If a time length T of the entire adiabatic evolution process is long enough (that is, the evolution is performed slowly enough), a quantum state provided by the quantum computer would maintain at a ground state of an instantaneous Hamiltonian. In the related art, Q-learning in reinforcement learning is adopted to determine an optimal adiabatic evolution path.
When there are more optional actions for evolving from a system state to a next system state in the adiabatic evolution path, efficiency of the Q-learning is decreased and convergence tends to be unstable.

SUMMARY

A method and apparatus for predicting an adiabatic evolution path, a device, and a storage medium are provided according to embodiments of this application, which can improve efficiency when predicting an optimal adiabatic evolution path and convergence of the optimal adiabatic evolution path. The technical solutions are described as follows.
According to one aspect of this application, a method for predicting an adiabatic evolution path is provided. The method includes:

obtaining a target Hamiltonian H1 of a quantum computation problem;

determining an initial Hamiltonian H0 and a target ground state energy El based on the target Hamiltonian H1;

converting a search for an adiabatic evolution path from the initial Hamiltonian H0 to the target ground state energy El into a chessboard game;

determining an optimal chessboard path of the chessboard game through a Monte Carlo tree search in combination with a neural network; and

obtaining the adiabatic evolution path based on the optimal chessboard path.

According to an aspect of this application, an apparatus for predicting an adiabatic evolution path is further provided. The apparatus includes: an obtaining module, a determination module, a conversion module, a tree search module, and an output module. The obtaining module is configured to obtain a target Hamiltonian H1 of a quantum computation problem. The determination module is configured to determine an initial Hamiltonian H0 and a target ground state energy E1 based on the target Hamiltonian H1. The conversion module is configured to convert a search for an adiabatic evolution path from the initial Hamiltonian H0 to the target ground state energy El into a chessboard game. The tree search module is configured to determine an optimal chessboard path of the chessboard game through a Monte Carlo tree search in combination with a neural network. The output module is configured to obtain the adiabatic evolution path based on the optimal chessboard path.
According to another aspect of this application, a computer device is provided according to an embodiment of this application, which includes a processor and a memory. The memory stores at least one instruction, at least one program, a code set or an instruction set. The at least one instruction, the at least one program, the code set or the instruction set is loaded and executed by the processor to implement the foregoing method for predicting an adiabatic evolution path.

According to another aspect of this application, a quantum computer is provided according to an embodiment of this application, the quantum computer is configured to perform adiabatic evolution based on an adiabatic evolution path predicted by the foregoing method.

According to another aspect of this application, a computer-readable storage medium is provided according to an embodiment of this application, the computer-readable storage medium stores at least one instruction, at least one program, a code set or an instruction set. The at least one instruction, the at least one program, the code set or the instruction set is loaded and executed by a processor to implement the foregoing method for predicting an adiabatic evolution path.

According to another aspect of this application, a computer program product is provided according to an embodiment of this application, the computer program product is configured to perform, when executed by a processor, the foregoing method for predicting an adiabatic evolution path.

According to an aspect of this application, a computer program product is provided according to an embodiment of this application, the computer program product includes computer instructions, the computer instructions are stored in a computer-readable storage medium. A processor of a computer device reads the computer instructions from the computer-readable storage medium and executes the computer instructions to cause the computer device to perform the foregoing method for predicting an adiabatic evolution path.

The technical solutions provided in the embodiments of this application may include at least the following beneficial effects. First, a search problem of an adiabatic evolution path is converted into a chessboard game, an optimal chessboard path of the chessboard game is determined through a Monte Carlo tree search in combination with a neural network, and an optimal adiabatic evolution path can be deduced based on the optimal chessboard path. Therefore, in a case that there are too many candidate actions for each state in the adiabatic evolution path, a stable and convergent adiabatic evolution path can be determined quickly and efficiently, thereby improving adiabatic evolution efficiency of an adiabatic quantum computation system, thus shortening the time for providing a target ground state.

## BRIEF DESCRIPTION OF THE DRAWINGS

To describe technical solutions in embodiments of this application more clearly, the drawings required for describing the embodiments are briefly introduced in the following. Apparently, the drawings in the following description show only some embodiments of this application, and a person of ordinary skill in the art may still derive other drawings from these drawings without creative efforts.

To describe technical solutions in the embodiments of this application more clearly, the drawings required for describing the embodiments are briefly introduced in the following. Apparently, the drawings in the following description show only some embodiments of this application, and a person of ordinary skill in the art may still derive other drawings from these drawings without creative efforts.

FIG. 1 is a structural block diagram of a computation system according to an embodiment of this application.

FIG. 2 is a flowchart of a method for predicting an adiabatic evolution path according to an embodiment of this application.

FIG. 3 is a flowchart of a process for converting an adiabatic evolution path into a chessboard game according to an embodiment of this application.

FIG. 4 is a schematic diagram of a chessboard of a chessboard game according to an embodiment of this application.

FIG. 5 is a flowchart of a method for predicting an adiabatic evolution path according to another embodiment of this application.

FIG. 6 is a schematic diagram of a game tree corresponding to a chessboard game according to an embodiment of this application.

FIG. 7 is a schematic diagram of four stages of a Monte Carlo tree search according to an embodiment of this application.

FIG. 8 is a schematic diagram of principles of a Monte Carlo tree search and a neural network according to an embodiment of this application.

FIG. 9 is a flowchart of a method for predicting an adiabatic evolution path according to an embodiment of this application.

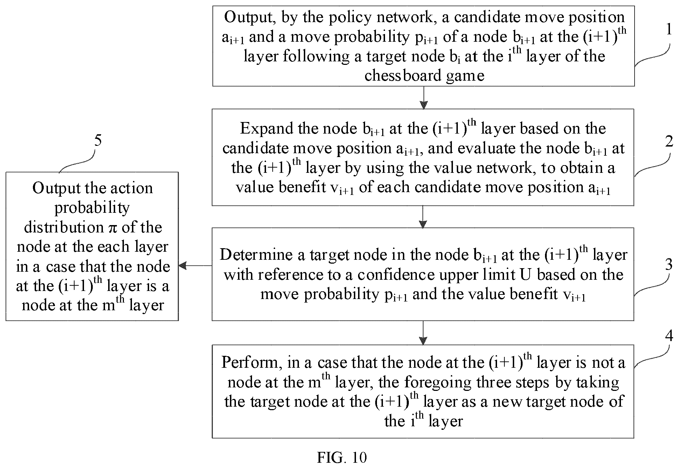

FIG. 10 is a flowchart of searching process of a Monte Carlo tree search according to an embodiment of this application.

FIG. 11 is a schematic diagram of principles of training a neural network according to an embodiment of this application.

FIG. 12 is a flowchart of a method for predicting an adiabatic evolution path according to an embodiment of this application.

FIG. 13 to FIG. 17 are diagrams each showing a comparison of effects of an adiabatic evolution path predicted in this application and a conventional adiabatic evolution path.

FIG. 18 is a block diagram of an apparatus for predicting an adiabatic evolution path according to an embodiment of this application.

FIG. 19 is a schematic structural diagram of a computer device according to an embodiment of this application.

## DESCRIPTION OF EMBODIMENTS

To make objectives, technical solutions, and advantages of this application clearer, embodiments of this application are described in detail in the following with reference to the drawings.

First, several terms involved in this application are introduced.

1. Quantum computation is a way of performing computation based on quantum logic, where data is stored in the unit of a quantum bit (qubit).

2. Qubit indicates a unit for quantum computation. A conventional computer uses 0 and 1 as units of binary. A difference is that: in quantum computation, 0 and 1 can be computed simultaneously, and a quantum system (system for short) may be in a linear superposition state of 0 and 1, that is, $|\psi\rangle = \alpha|0\rangle + \beta|1\rangle$, where $\alpha$ and $\beta$ represent probability amplitudes of the system regarding 0 and 1, and are complex numbers. Modular squares $|\alpha|^2, |\beta|^2$ represent probabilities of being 0 and 1. For example, $|\alpha|^2, |\beta|^2 = 1$.

3. Hamiltonian is a Hermitian conjugate matrix H describing a total energy of a quantum system.

4. Eigenstate: for a Hamiltonian matrix H, a solution to an equation $H|\psi\rangle = E|\psi\rangle$ is referred to as an eigenstate $|\psi\rangle$ of H, having an energy eigenvalue E.

5. Ground state is an eigenstate with the lowest energy.

6. Separable state and entangled state: for a quantum system including two parts, A and B, a quantum state of the quantum system is expressed as $|\psi \in H_A \otimes H_B$. If $|\psi\rangle$ can decomposed into a tensor product, that is, $|\psi\rangle_A \otimes |\psi\rangle_B$, the quantum state is referred to as a separable state, and otherwise, the quantum state is referred to as an entangled state.

7. Adiabatic quantum computation involves a theoretical model for implementing a quantum computer, where a computation problem is solved by realizing a physical process, and an answer to the computation problem is reflected by a ground state of a target Hamiltonian. A computation process of the adiabatic quantum computation is implemented by adiabatically evolving from an initial Hamiltonian (H0), of which a ground state is easily provided, to a target Hamiltonian (H1). If a time length T of the entire adiabatic evolution process is long enough (that is, the evolution is performed slowly enough), a quantum state provided by the quantum computer would maintain at a ground state of an instantaneous Hamiltonian. A Hamiltonian in a classical adiabatic quantum computation process may be expressed in a combination form in which the initial Hamiltonian and the target Hamiltonian vary with time:

$$H(s(t)) = (1 - s(t))H0 + s(t)H1$$

where a function of adiabatic evolution (schedule) is defined as s(t): $[0, T] \rightarrow [0,1]$.

8. Fidelity: for two quantum pure states, $|\psi\rangle$, $|\phi\rangle$, the fidelity is defined as a modulus square $|\langle\psi|\phi\rangle|^2$ of an inner product of the vectors.

9. Optimal adiabatic path: for a fixed T, the optimal adiabatic path is represented by a resolution to the following

optimization problem:

$$\min_{\{s(t)\}} \langle \psi(T)|H_1|\psi(T)\rangle, \#(1)$$

$$\frac{\partial}{\partial t}|\psi(t)\rangle = -i\left(\left(1 - s(t)\right)H_0 + s(t)H_1\right)|\psi(t)\rangle, \qquad |\psi(0)\rangle = |g_0\rangle \#(2)$$

where $|g_0\rangle$ represents a ground state of $H_0$.

10. Quantum annealing: adiabatic evolution involves an ideal theoretical model of quantum computation. In practice, since quantum hardware may be effected by noises, or an adiabatic evolution time length T is not long enough, a quantum state provided by a quantum computer cannot always maintain at a ground state of an instantaneous Hamiltonian as that in the theoretical adiabatic evolution. This computation mode is referred to as quantum annealing.

11. Reinforcement learning is a branch of machine learning, where an AI algorithm determines, through an interaction process with an environment, how to perform task feedback and learns, from the task feedback, how to perform a task efficiently.

12. Decision policy $\pi$ represents a specific neural network under a reinforcement learning framework. If a given state of a system serves as an input of the policy network, the policy network outputs a to-be-executed action.

A reinforcement learning framework using "a Monte Carlo tree search in combination with a neural network" is provided in this application, to automatically determine an optimal adiabatic evolution path, to facilitate quantum annealing and adiabatic quantum computation, to resolve the quantum computation problem efficiently. "Efficiently" herein refers to: (1) improving the fidelity of a quantum state relative to a ground state of a target Hamiltonian; and (2) reducing an energy for quantum computation.

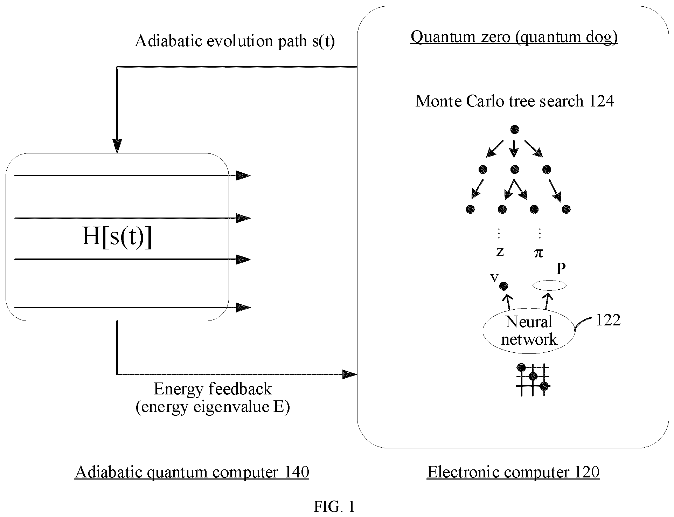

FIG. 1 is a schematic diagram of an architecture of a computation system 100 according to an exemplary embodiment of this application. The computation system 100 includes an electronic computer 120 and a quantum computer 140.

A Monte Carlo tree search (MCTS) 124 in combination with a neural network 122 is run on the electronic computer 120. For example, a reinforcement learning framework of the Monte Carlo tree search 124 in combination with the neural network 122 may be referred to as "quantum zero" (quantum dog for short) in this application. The Monte Carlo tree search 124 is configured to predict an optimal adiabatic evolution path s(t) with the guide of the neural network 122.

The electronic computer 120 is connected to the quantum computer 140.

The quantum computer 140 is configured to run the predicted adiabatic evolution path s(t) outputted by the Monte Carlo tree search 124 and output an energy eigenvalue E of the predicted adiabatic evolution path s(t) when the predicted adiabatic evolution path s(t) evolves to a final state, and provide the energy eigenvalue E to the electronic computer 120.

Assuming that a win condition is that the energy eigenvalue E is less than or equal to a target ground state energy El, if the energy eigenvalue E does not meet the win condition, the electronic computer 120 updates a parameter of the neural network 122 based on the energy eigenvalue E, that is, performs reinforcement learning. The electronic computer 120 obtains a reinforcement learning neural network, and uses the reinforcement learning neural network to guide the Monte Carlo tree search 124 again to predict the optimal adiabatic evolution path s(t); if the energy eigenvalue E meets the win condition, the electronic computer 120 outputs the predicted adiabatic evolution path s(t) as an optimal adiabatic evolution path.

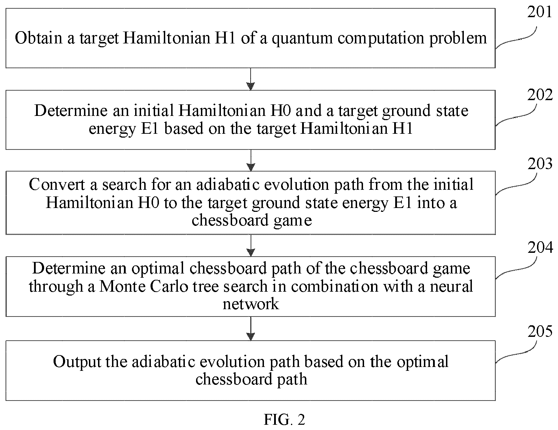

FIG. 2 is a flowchart of a method for predicting an adiabatic evolution path according to an exemplary embodiment of this application. In this embodiment, a description is made by taking an example in which the method is applied to the electronic computer 120 shown in FIG. 1. The method includes the following steps 201 to 205.

In step 201, a target Hamiltonian H1 of a quantum computation problem is obtained.

For a quantum computation problem, a computation process is implemented by adiabatically evolving from an initial Hamiltonian H0, of which a ground state is easily provided, to a target Hamiltonian H1. If a time length T of the entire adiabatic evolution process is long enough (that is, the evolution is performed slowly enough), a quantum state provided by the quantum computer would maintain at a ground state of an instantaneous Hamiltonian.

Specifically, the quantum computation problem includes at least one of the following problems: A. a to-be-simulated chemical molecular system; B. a quantum many-body physics model of a to-be-resolved ground state; and C. a combination optimization problem converted into a quantum physics problem, for example, a combination optimization problem such as 3AT, MaxCut, or MaxQP.

A Hamiltonian for adiabatic quantum computation may be represented as a combination form in which the initial Hamiltonian H0 and the target Hamiltonian H1 varying with time:

$$H(s(t)) = (1 - s(t))H0 + s(t)H1$$

where H0 represents the initial Hamiltonian, and H1 is the target Hamiltonian. s(t) represents an adiabatic evolution (schedule) function, and is defined as s (t) : $[0,T] \to [0,1]$. T represents a preset adiabatic evolution time length, and t represents a time.

In step 202, an initial Hamiltonian H0 and a target ground state energy E1 is determined based on the target Hamiltonian H1.

The initial Hamiltonian H0 is easily provided. The target ground state energy EI is a desired energy threshold. The target ground state energy EI indicates a quantum state (which may be understood as a quantum state with the lowest energy) of a desired energy at the final state that is adiabatically evolved from the initial Hamiltonian H0.

The initial Hamiltonian H0 and the target ground state energy EI may be set based on the target Hamiltonian H1 of the quantum computation problem. For example, the initial Hamiltonian H0 and the target ground state energy EI are set by hand. Alternatively, the initial Hamiltonian H0 and the target ground state energy E1 are set according to a program.

In step 203, a search for an adiabatic evolution path from the initial Hamiltonian H0 to the target ground state energy EI is converted into a chessboard game.

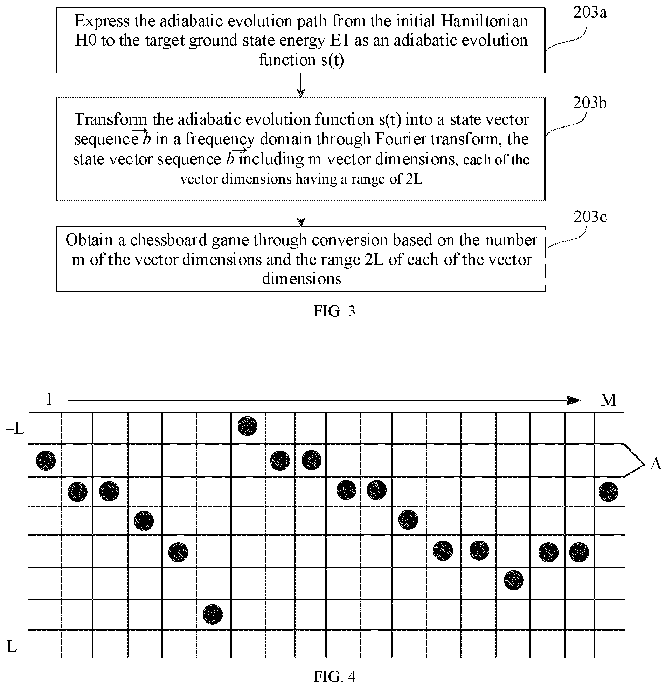

The adiabatic evolution path (adiabatic path for short) is an evolution path from the initial Hamiltonian H0 to the target ground state energy E1. A search problem of the adiabatic evolution path may be simulated to be a chessboard game from the mathematical aspect, that is, a board game or a chessboard game. As shown in FIG. 3, the conversion process includes at least the following steps 203a to 203c.

In step 203a, the adiabatic evolution path from the initial Hamiltonian H0 to the target ground state energy EI is expressed as an adiabatic evolution function s(t). where the adiabatic evolution function is defined as s(t): $[0,T] \to [0,1]$.

In step 203b, the adiabatic evolution function s(t) is transformed into a state vector sequence $\vec{b}$ in a frequency domain through Fourier transform, the state vector sequence $\vec{b}$ includes m vector dimensions, each vector dimension has a range of 2L, where the adiabatic evolution function s(t) is expressed in the frequency domain through Fourier transform according to the following equation 2:

$$s(t) = \frac{t}{T} + \sum_{i=1}^{M} b_i \sin \frac{j\pi t}{T}$$

where $t$ represents a time, $T$ represents a preset adiabatic evolution time length, and $b_i$ represents a state vector, $i$ represents an integer not greater than $M$. Therefore, the search problem of the adiabatic evolution path is converted into searching for a state vector sequence $(b_1, b_2, ..., b_M)$, so that an energy of the final state $|\psi(T)\rangle$ obtained through adiabatic evolution is as low as possible. That is, an optimal state vector sequence $\vec{b} = (b_1, b_2, ...,b_M)$ needs to be found. Each $b_i$ is preset to be a discrete value within a specific range, $b_j \in [-l, -l + \Delta, ..., l - \Delta, l]$, where $\Delta$ represents a discretization step length, and $-l$ and $l$ represent respectively lower limit and upper limit for $bi$.

In step 203c, the chessboard game is obtained through conversion based on the number m of the vector dimensions and the range 2L of each vector dimension.

As exemplarily shown in FIG. 4, a chessboard corresponding to the chessboard game obtained through conversion includes 2L/$\Delta$ rows and m columns, each column corresponding to a move position of a chess, $\Delta$ indicates a discretization step length. That is, pieces are placed in sequence from the left side of the chessboard to the right side of the chessboard, and there is exactly one piece (just one piece) in each column, and there are 2L/$\Delta$ candidate move positions for the piece in each column. A chessboard layout in which M pieces are placed corresponds to a specific state vector sequence $\vec{b}$. In different embodiments, $\Delta$ may be alternatively represented by another English variable, which is not limited in this application.

In step 204, an optimal chessboard path of the chessboard game is determined through a Monte Carlo tree search in combination with a neural network.

A game process of the chessboard game may be expressed as a game tree in mathematics. In this embodiment, the game tree includes m layers of nodes, each node corresponds to 2L/$\Delta$ nodes at a lower layer, and nodes at the ith

layer correspond to move positions in the $i^{th}$ column of the chessboard. In the game tree, it is assumed that a node at an uppermost layer is a root node, and a node at a lowermost layer is a leaf node. An optimal chessboard path is a path from the root node to the leaf node on the game tree.

The Monte Carlo tree search is a method for making optimal decisions for artificial intelligence problems, and generally, is a move planning form in a combinatorial game. The Monte Carlo tree search combines generality of stochastic simulation and accuracy of tree search, and is applied to the game tree, for example, the AlphaZero in the chess problem also adopts the computation architecture. For example, the Monte Carlo tree search includes the following four stages: 1. selection, 2. expansion, 3. simulation, and 4. backpropagation. The four stages may be performed for multiple times.

The reinforcement learning framework of the Monte Carlo tree search in combination with the neural network is a machine learning framework of the Monte Carlo tree search with the assistance of the neural network. For example, the neural network assists the selection stage and the simulation stage in the Monte Carlo tree search. The neural network may be a convolutional neural network, for example, a residual network ResNet adopting a residual architecture.

In an example, the neural network includes a policy network and a value network. The policy network is configured to assist a node selection in the Monte Carlo tree search, to effectively reduce a search space during a search. The value network is configured to assist a simulation stage in the Monte Carlo tree search, to improve accuracy and a speed of the simulation stage.

An optimal chessboard path of the chessboard game can be quickly determined through the Monte Carlo tree search in combination with the neural network.

In step 205, the adiabatic evolution path is obtained based on the optimal chessboard path.

The optimal chessboard path in the chessboard game corresponds to an optimal state vector sequence $\vec{b} = (b_1, b_2, ..., b_M)$. An optimal adiabatic evolution path s(t) can be obtained based on the optimal state vector sequence $\vec{b}$.

In view of the above, according to the method in this embodiment, first, a search problem of an adiabatic evolution path is converted into a chessboard game, an optimal chessboard path of the chessboard game is determined through a Monte Carlo tree search in combination with a neural network, and an optimal adiabatic evolution path can be deduced based on the optimal chessboard path. Therefore, in a case that there are too many candidate actions for each state in the adiabatic evolution path, a stable and convergent adiabatic evolution path can be determined quickly and efficiently, thereby improving adiabatic evolution efficiency of an adiabatic quantum computation system, thus shortening the time for providing a target ground state.

Reinforcement learning is a branch of machine learning. In short, the reinforcement learning is performed to learn how to determine an action based on a state of an environment, to maximize a final reward. In this application, with the Monte Carlo tree search in combination with the neural network, an adiabatic evolution path can be predicted. In practice, the adiabatic evolution path is inputted into the quantum computer (that is, an environment), an energy eigenvalue E of a quantum computer when the quantum computer evolves to a final state can be obtained, and the energy eigenvalue E is used as a reward for performing reinforcement learning on the neural network. Through multiple attempts, the Monte Carlo tree search finally summarizes an optimal chess layout in the chessboard game, which means that an optimal adiabatic evolution path is found.

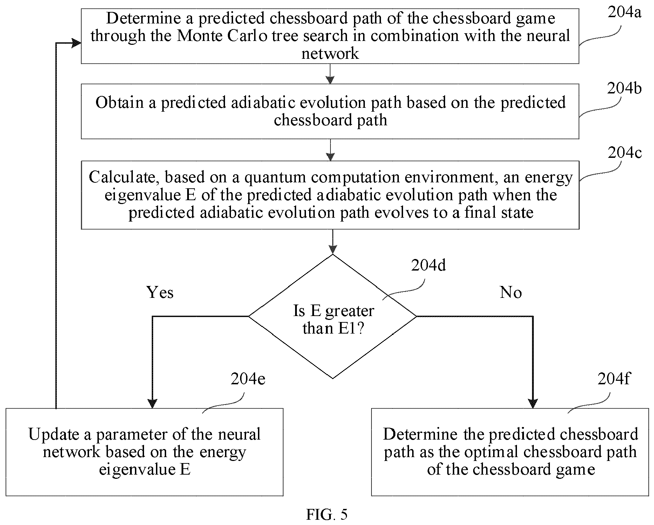

In an embodiment based on FIG. 2, step 204 may include at least the following steps 204a to 204f shown in FIG. 5.

In step 204a, a predicted chessboard path of the chessboard game is determined through the Monte Carlo tree search in combination with the neural network.

In a case that a parameter θ in the neural network is known, the game tree corresponding to the chessboard game is searched through the Monte Carlo tree search in combination with the neural network, to obtain a predicted chessboard path of the chessboard game, that is, an optimal chessboard path with a current prediction capability.

In step 204b, a predicted adiabatic evolution path is obtained based on the predicted chessboard path.

The electronic computer maps the predicted chessboard path as a state vector sequence $\vec{b}$, and obtains a predicted adiabatic evolution path s(t) based on the state vector sequence $\vec{b}$.

In step 204c, an energy eigenvalue E of the predicted adiabatic evolution path when the predicted adiabatic evolution path evolves to a final state is calculated based on a quantum computation environment.

The electronic computer transmits the predicted adiabatic evolution path s(t) to the quantum computer, and the quantum computer adiabatically evolves to a final state based on the predicted adiabatic evolution path s(t), and measures a quantum state and a corresponding energy eigenvalue E when evolving to the final state.

In an alternative implementation, with a fixed adiabatic evolution time length T, the electronic computer solves the quantum Schrodinger equation based on the predicted adiabatic evolution path s(t), and obtains, based on a result of the solution, the quantum state and the corresponding energy eigenvalue E when evolving to the final state.

In step 204d, it is determined whether the energy eigenvalue E is greater than the target ground state energy E1.

In an example, the win condition is that a difference between the energy eigenvalue E and the target ground state energy El is less than a threshold. When the threshold is 0, the win condition is that the energy eigenvalue E is less than or equal to the target ground state energy El. In this embodiment, an example in which the win condition is that the energy eigenvalue E is less than or equal to the target ground state energy El is used for description.

If the energy eigenvalue E is greater than the target ground state energy El, a determination result indicates that the win condition is not met, and step 204e is performed. If the energy eigenvalue E is less than or equal to the target ground state energy El, a determination result indicates that the win condition is met, and step 204f is performed.

In step 204e, a parameter of the neural network is updated based on the current prediction process, and step 204a is performed again after the updating.

In a case that the energy eigenvalue E is greater than the target ground state energy El, this indicates that an optimal adiabatic evolution path is not found, a reward value z=-1 for not winning is determined based on this prediction process. The parameter $\theta$ of the neural network is updated based on the reward value z=-1 (and a predicted chessboard path b and an action policy probability $\pi$ outputted by the Monte Carlo tree search) to obtain a parameter with a better performance. After the parameter $\theta$ of the neural network is updated, step 204a to step 204d are performed again.

In step 204f, the predicted chessboard path is determined as the optimal chessboard path of the chessboard game.

In a case that the energy eigenvalue E is less than or equal to the target ground state energy El, this indicates that the optimal adiabatic evolution path is found, the electronic computer determines the predicted chessboard path currently outputted by the Monte Carlo tree search as the optimal chessboard path of the chessboard game.

It is to be noted that the "optimal chessboard path" in this application is a relatively optimal chessboard path in a case that the win condition is met, rather than a theoretically optimal chessboard path. That is, the "optimal" in this application should not be understood as a theoretical limit in its narrowest sense.

In view of the above, according to the method in this embodiment, after an optimal predicted chessboard path is predicted through an AI algorithm (Monte Carlo tree search + neural network) with a current capability, an energy eigenvalue E fed back by a quantum computation environment is used as a reward, and in a case that the energy eigenvalue E does not meet a win condition, a parameter of the neural network is updated based on the reward to obtain a better neural network. After multiple training or updating processes, the AI algorithm can output an optimal chessboard path meeting the win condition.

To help understand an operation process with "Monte Carlo tree search + neural network", the description is made in the following listed order:

1. Game tree;

2. Monte Carlo simulation;

3. Basic Monte Carlo tree search; and

4. Monte Carlo tree search in combination with a neural network.

1. Game tree

A game tree is a data structure in a form of a tree, and each node on the tree represents a determination state of the game. Conversion from one node to a child node of the node is referred to as an action. The number of child nodes of a node is referred to as a branching factor. A root node of the game tree represents an initial state of the game. A leaf node of the game tree is a node without a child node, which indicates that the game cannot be continued. A state of the leaf node may be evaluated, and a result (win or loss) of this round of game may be obtained.

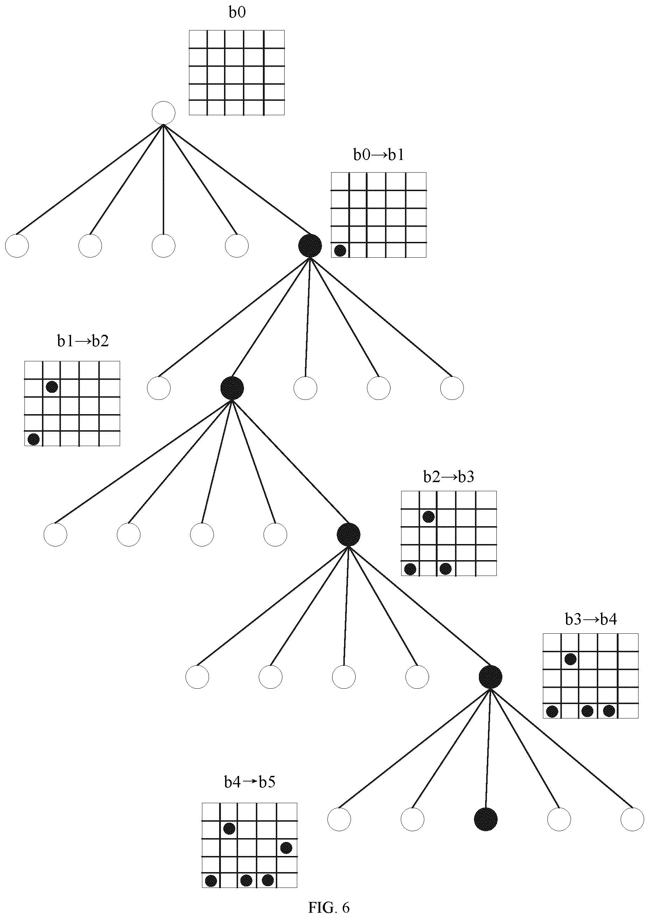

With reference to FIG. 4, the game tree corresponding to the chessboard game in this application includes (m+1) layers of nodes, a root node is a node at the 0th layer, a node at the $i^{th}$ layer corresponds to a move position of the $i^{th}$ state $b_i$, a branching factor of a node at each layer is $2L/\Delta$, that is, the number of layers of the game tree is equal to the number (m+1) of columns of the chessboard, and the number of branches of a node at each layer is equal to the number of rows of the chessboard. FIG. 6 schematically shows an example of a game tree in which m=5, and $2L/\Delta2=5$. In an initial state, a root node corresponds to a chessboard layout of an empty chessboard. Five nodes from left to right in nodes at the first layer respectively correspond to five candidate move positions from top to bottom in the first column in the chessboard. Nodes at the second layer are presented following the fifth candidate move position in a b1 state. Five nodes from left to right in nodes at the second layer respectively correspond to five candidate move positions in the second column in the chessboard from top to bottom. Nodes at the third layer are presented following the second candidate move position in a b2 state. Five nodes from left to right in nodes at the third layer respectively correspond to five candidate move positions in the third column in the chessboard from top to bottom. Nodes at the fourth layer are presented following the fifth candidate move position in a b3 state. Five nodes from left to right in nodes at the fourth layer respectively correspond to five candidate move positions in the fourth column in the chessboard from top to bottom.

Nodes at the fifth layer are presented following the fifth candidate move position in a b4 state. Five nodes from left to right in nodes at the fifth layer respectively correspond to five candidate move positions in the fifth column in the chessboard from top to bottom. The current game ends in a case that the third candidate move position in a b5 state is selected.

A tree traversal (path) from the root node to the third leaf node at the fifth layer represents a game process. After the game process is completed, the third node at the fifth layer may be evaluated, to evaluate whether the current game meets the win condition.

2. Monte Carlo simulations

The Monte Carlo simulation is a simulation method using a probability statistics theory as a guide. The Monte Carlo simulation is named based on a casino city in Monaco. The idea of the Monte Carlo simulation is described by taking a simple graphics problem. Assuming that an area of an irregular pattern on the ground is to be calculated, a ball is randomly dropped into a rectangle including the irregular pattern on the ground, each time the ball is dropped, a dropping count N is increased by 1, and if the ball falls into the irregular pattern, a win count W is increased by 1. After the ball is dropped for multiple times, the area of the irregular pattern is considered to be W/N.

That is, in a case that an area summation method of an irregular pattern is unknown, the area of the irregular pattern is predicted by using the probability in the probability statistics.

It is to be noted that the Monte Carlo simulation and the Monte Carlo tree search are two different processes, but are similar in the idea.

3. Basic Monte Carlo tree search

Returning to the Monte Carlo tree search, searching is a main concept of the Monte Carlo tree search, that is, performing a downward traversal process along a game tree. A single traversal path extends from a root node (an initial game state or a current game state) to a node not expanded completely, until the current game ends. Each node in the Monte Carlo tree represents a chessboard layout, and an attribute "W/N" on the node represents that the node has been accessed for N times, and won for W times. For example, an initial root node is 12/21, which means that 21 simulations have been performed in total, and there are 12 times of wins. W may be regarded as a total simulation rewards, and N may be regarded as a total number of times of accesses.

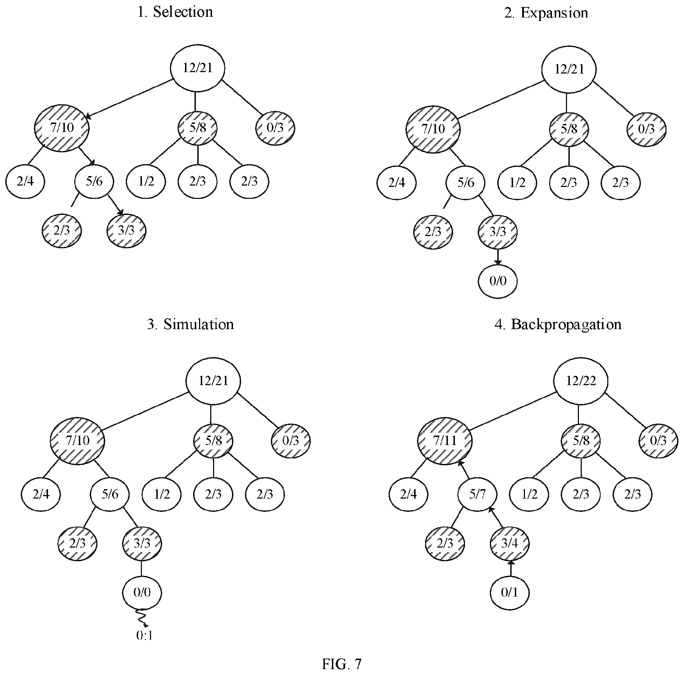

As shown in FIG. 7, the basic Monte Carlo tree search includes the following four steps 1) to 4).

1). Selection

Going downward from the root node, a "most worth watching child node" is selected each time until a node $b_i$ "having unexpanded child nodes" is reached. The description "having unexpanded child nodes" actually means that there are untraveled moves in the chessboard layout. How to select the "most worth watching child node" is described below.

2). Expansion

A child node (located at a layer $b_{i+1}$) with an attribute of "0/0" is added to the node $b_i$ which corresponds to the "unexpanded child node" in the foregoing step, that is, a move that has not been tried is provided.

3). Simulation

Starting from the newly added child node in the foregoing step, moves are made using a random move policy to the last step, to obtain a result. According to a general opinion, the random move policy is a policy with weak chess capability but quick moves.

4). Backpropagation

A simulation result (win or loss) is added to all parent nodes of the newly added child node, that is, N+1 for all the parent nodes, and W+1 for all the parent nodes if the simulation result indicates a win.

After the simulation is performed for multiple times, a path formed by nodes each having a largest simulation reward (or the largest number of times of access) at each layer is determined as an optimal chessboard path.

4. Monte Carlo tree search in combination with a neural network

According to FIG. 6 and FIG. 7, if a depth (the number of layers) and a breadth (the number of nodes at each layer) of the game tree are small, an accurate optimal chessboard path may be obtained based on the game tree by exhaustively enumerating all branches. However, if the depth and the breadth of the game tree are large, a search space during the foregoing computation is very huge, resulting in difficult computation.

The depth and the breadth of the search space of the game tree are reduced by using the neural network in this embodiment of this application. The following two aspects are mainly included.

(1) A policy network P is provided, which can predict, for a current node $b_i$, several most likely candidate move positions ai+i in the next move process, and a move probability p ($a_{i+1}$, $b_i$) of each candidate move position $a_{i+1}$.

In this way, for the current node $b_i$, the Monte Carlo tree search only needs to search several most likely child nodes at the next layer without searching all the child nodes at the next layer, thereby reducing the search space of the game tree in breadth.

However, to make a move that the neural network cannot predict, during the selection, the Monte Carlo tree search not only performs prediction by relying on the move probability p (also referred to as the policy vector p) predicted by the policy network P, but also performs comprehensive selection with reference to the number of times of historical accesses to the candidate move position. That is, the Monte Carlo tree search preferentially selects a child node having "a high move probability + a small number of times of historical accesses" in the child nodes at the next layer as a target child node.

(2) A value network V is provided, which can predict a probability v that a game result of a child node $b_{i+1}$ corresponding to a candidate move position $a_{i+1}$ indicates win.

In this case, for an unexpanded child node $b_{i+1}$, the moves to the last step based on the random move policy do not need to be simulated, and a game result v is directly predicted by the value network V, thereby reducing the search space of the game tree in depth.

With the guide of the policy network P and the value network V in the neural network, the Monte Carlo tree search can find the optimal chessboard path of the game tree quickly.

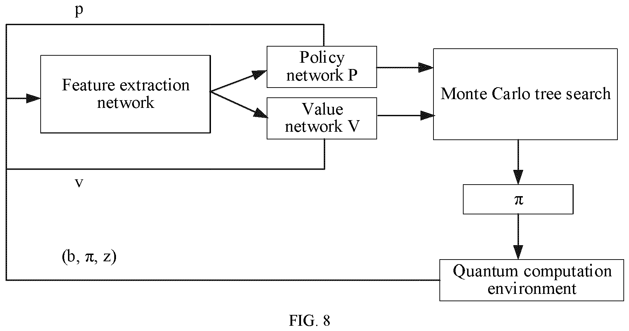

In an example shown in FIG. 8, the neural network includes a feature extraction network, a policy network P, and a value network V. In the prediction process, a current chessboard layout b (first i nodes $b_i$) is inputted into the feature extraction network for feature extraction, and extracted features are provided to the policy network P and the value network V for prediction. The policy network P is configured to predict a candidate move position and a move probability (a policy vector p for short) of a next piece, and the value network V is configured to predict a value benefit v (a possibility of win) of an entire chessboard layout corresponding to the next piece. The Monte Carlo tree search quickly finds an optimal chessboard path with a current prediction capability within a reduced search space with the guide of the policy network P and the value network V, and outputs the path as a predicted chessboard path. Specifically, the predicted chessboard path is obtained through an action having the highest action probability distribution $\pi$ in each state.

The quantum computation environment (for example, a real adiabatic quantum computer) adiabatically evolves based on the predicted chessboard path to obtain an energy eigenvalue E when evolving to a final state. If the energy eigenvalue E does not meet a win condition, a reward value z=-1 corresponds to the predicted chessboard path, and a parameter θ of the neural network is updated by using (b, $\pi$, z). b indicates a predicted chessboard path of this prediction, $\pi$ indicates an action probability distribution outputted by the Monte Carlo tree search, and z indicates a reward value for not winning. A training target is to maximize a similarity between the policy vector p and the action probability distribution $\pi$ and minimize an error between the value benefit v and a reward value z for not winning.

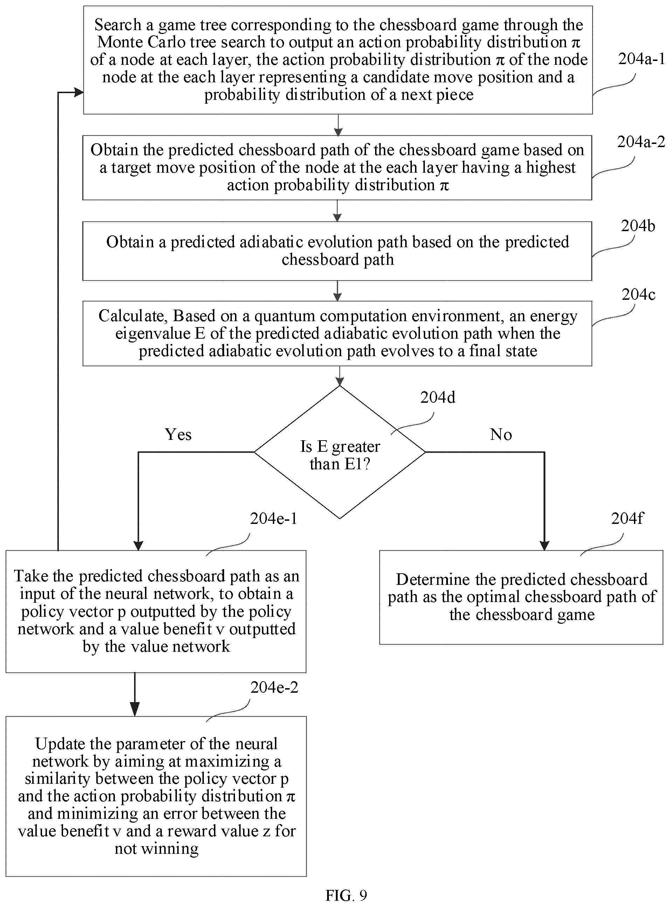

FIG. 9 is a flowchart of an evolution method of an adiabatic evolution path according to an exemplary embodiment of this application. In this embodiment, an example in which the method is applicable to an electronic computer or a computer device is used for description. The method includes the following steps 204a-1 to 204f.

In step 204a-1, a game tree corresponding to the chessboard game is searched through the Monte Carlo tree search to output an action probability distribution $\pi$ of a node at each layer, the action probability distribution $\pi$ of the node at each layer represents a candidate move position and a probability distribution of a next piece.

In this application, the game tree corresponding to the chessboard game has M+1 layers of nodes. Starting from a root node (or a target node in nodes at a specific layer), searching is performed through the Monte Carlo tree search. For example, this step includes the following sub-steps S1 to S5.

In step S1, a candidate move position $a_{i+1}$ and a move probability $p_{i+1}$ of a node $b_{i+1}$ at the $(i+1)^{th}$ layer is outputted by the policy network following a target node $b_i$ at the $i^{th}$ layer of the chessboard game.

The target node $b_i$ at the $i^{th}$ layer corresponds to a target move position of a node at the $i^{th}$ layer, i is an integer not greater than (m-1). The target move position is an optimal move position predicted currently.

Because there are generally multiple candidate move positions $a_{i+1}$ at a next layer, and each candidate move position $a_{i+1}$ has a respective move probability $p_{i+1}$, the multiple candidate move positions $a_{i+1}$ and the move probabilities

$p_{i+1}$ may be collectively referred to as a policy vector p (or a move probability distribution).

In step S2, the node $b_{i+1}$ at the $(i+1)^{th}$ layer is expanded based on the candidate move position $a_{i+1}$, and the node $b_{i+1}$ at the $(i+1)^{th}$ layer is evaluated by the value network, to obtain a value benefit $v_{i+1}$ of each candidate move position $a_{i+1}$.

No actual simulation needs to be performed for the expanded node $b_{i+1}$ at the $(i+1)^{th}$ layer. The value benefit $v_{i+1}$ of the node $b_{i+1}$ at the $(i+1)^{th}$ layer is directly predicted by the value network. A value benefit $v_{i+1}$ of each candidate move position $a_{i+1}$ represents a win probability at the candidate move position, that is, a game result at the candidate move position.

Specifically, the value benefit $v_{i+1}$ is represented by using 1 or -1, 1 represents win, and -1 represents loss. In other words, -1 represents that a prediction result is that an energy eigenvalue E is greater than a target ground state energy E1, and 1 represents that a prediction result is that an energy eigenvalue E is less than or equal to a target ground state energy E1.

In step S3, a target node in the nodes $b_{i+1}$ at the $(i+1)^{th}$ layer is determined with reference to a confidence upper limit U based on the move probability $p_{i+1}$ and the value benefit $v_{i+1}$.

For example, during the selection stage of the Monte Carlo tree, the target node at the $(i+1)^{th}$ layer is selected based on the idea of "exploitation-exploration trade-off" according to the following formula 3:

$$a_{i+1} = argmax_a \left( Q(b_{i+1}, a) + c\, P(b_{i+1}, a) \frac{\sqrt{\sum_{a'} N(b_{i+1}, a')}}{1 + N(b_{i+1}, a)} \right)$$

where $b_{i+1}$ represents a current chessboard state after the selection on nodes at the $i^{th}$ layer is performed, a represents a next action (that is, the $(i+1)^{th}$ move) to be performed, Q represents an average cumulative value of value benefits $v_{i+1}$ of nodes that have been searched at the $(i+1)^{th}$ layer in the current chessboard state $b_{i+1}$, p represents a probability distribution of a move probability $p_{i+1}$ of each candidate move position in the nodes at the $(i+1)^{th}$ layer, $N(b_{i+1}, a)$ represents the current number of historical searches of a leaf node a in the nodes at the $(i+1)^{th}$ layer, $\sum_a N(b_{i+1}, a')$ represents the total number of times of historical searches of all nodes at the $(i+1)^{th}$ layer, and c represents a parameter used for balancing nodes that have been searched and nodes that have not been searched.

The left half part Q of the plus of the formula 3 is related to the move probability $p_{i+1}$ and the value benefit $v_{i+1}$, and the right half part is the confidence upper limit U, the confidence upper limit U is related to the number of historical searches.

In step S4, in a case that the node at the $(i+1)^{th}$ layer is not a node at the $m^{th}$ layer, the foregoing three steps are performed again by using the target node at the $(i+1)^{th}$ layer as a new target node of the $i^{th}$ layer.

In step S5, in a case that the node at the $(i+1)^{th}$ layer is a node at the $m^{th}$ layer, the action probability distribution π of the node at the each layer is outputted.

In step 204a-2, the predicted chessboard path of the chessboard game is obtained based on a target move position having a highest action probability distribution π of the node at each layer.

In step 204b, a predicted adiabatic evolution path is obtained based on the predicted chessboard path.

In step 204c, based on a quantum computation environment, an energy eigenvalue E of the predicted adiabatic evolution path when evolving to a final state is obtained.

In step 204d, it is determined whether the energy eigenvalue E is greater than the target ground state energy E1.

In an example, the win condition is that a difference between the energy eigenvalue E and the target ground state energy El is less than a threshold. When the threshold is 0, the win condition is that the energy eigenvalue E is less than or equal to the target ground state energy El. In this embodiment, an example in which the win condition is that the energy eigenvalue E is less than or equal to the target ground state energy El is used for description.

If the energy eigenvalue E is greater than the target ground state energy El, a determination result is that the win condition is not met, and step 204e-1 is performed. If the energy eigenvalue E is less than or equal to the target ground state energy El, a determination result is that the win condition is met, and step 204f is performed.

In step 204e-1, if the energy eigenvalue E does not meet the win condition, the predicted chessboard path serves as an input of the neural network, to obtain a policy vector p outputted by the policy network and a value benefit v outputted by the value network.

In step 204e-2, the parameter of the neural network is updated by aiming at maximizing a similarity between the policy vector p and the action probability distribution π and minimizing an error between the value benefit v and a reward value z for not winning.

For example, the parameter of the neural network is adjusted according to the following loss function:

$$\text{Loss} = (z - v)^2 - \pi^T logP + c'\|\theta\|^2$$

where z represents obtained by subtracting 1 from a reward value for not winning, v represents a value benefit predicted by the value network, $\pi$ represents an action policy probability outputted by the Monte Carlo tree search, p represents a policy vector predicted by the policy network, c' represents a coefficient for controlling a regularization item of a parameter L2, and $\theta$ represents a parameter of the neural network.

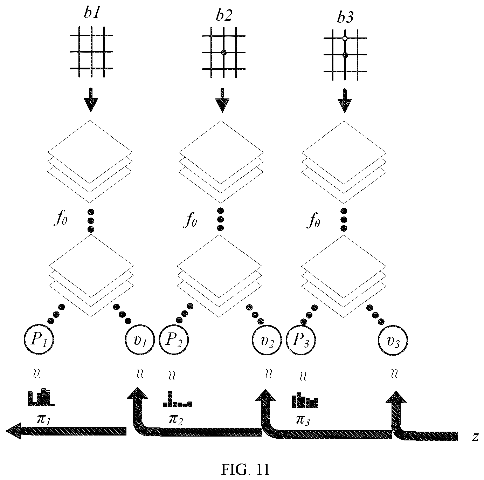

As shown in FIG. 11, in the tree search stage, for nodes b1, b2, and b3 at each layer, the neural network $f_\theta$ outputs corresponding policy vectors p and evaluation values v, and the policy vector p and the evaluation value v are used for guiding the Monte Carlo tree search. In the training stage, for the nodes b1, b2, and b3 at each layer, action probability distributions $\pi1$, $\pi2$, and $\pi3$ outputted by the Monte Carlo tree search and the reward value z for not winning are used as sample data to train the neural network $f_\theta$.

In step 204f, if the energy eigenvalue E meets the win condition, the predicted chessboard path is determined as the optimal chessboard path of the chessboard game.

In view of the above, according to the method in this embodiment, through the guide of the neural network, the Monte Carlo tree search can quickly find an optimal predicted chessboard path within a narrowed search space, thereby improving searching efficiency.

Application Scenarios

1. The Canadian D-Wave system is implemented based on adiabatic quantum computation, and evolution efficiency of such a computation system may be improved and the time for providing a target ground state may be shortened through an algorithm of this application. For a very unstable quantum system, a short providing time means that this application can protect the entire evolution process, maintain quantum advantages, and accelerate the development of adiabatic quantum computers.

2. A circuit design for universal quantum computation is accelerated. A major obstacle to the development of quantum computers is the short coherence time of the entire system, which, from the aspects of hardware, increases the difficulty in operation and design for scientific personnel. Scientists have proven the equivalence of adiabatic quantum computation and circuit quantum computation, and a quantum approximate optimization algorithm (QAOA) can facilitate to convert an adiabatic path into a quantum circuit. The algorithm in this application improves efficiency of adiabatic quantum, which is equivalent to that a shorter circuit may be found this application to achieve quantum computation in the conventional sense.

3. Password cracking. The adiabatic quantum computation may be used for cracking the current mainstream encryption technologies, and the algorithm in this application may also accelerate the entire process based on the original simplest linear adiabatic path, so as to improve efficiency of the password cracking greatly.

Reinforcement learning algorithms have been widely applied to the design of a task path in recent years. Especially, the AlphaZero algorithm has made major breakthroughs in games such as the Go game. It is found that, the reinforcement learning framework based on "Monte Carlo tree search in combination neural network" may be adjusted and improved, to design an optimal adiabatic path s(t), to facilitate quantum annealing and adiabatic quantum computation to resolve the computation problem more effectively.

In this application, the schedule function s(t) of the adiabatic evolution is expanded into the superposition of sine functions of different frequencies. That is, s(t) is represented in the frequency domain through the Fourier transform:

$$s(t) = \frac{t}{T} + \sum_{j=1}^{M} b_j \sin\frac{j\pi t}{T}$$

where $b_1$, $b_2$, ...,$b_M$ needs to be found so that an energy when evolving to the final state $|\psi(T)\rangle$ is as low as possible.

In this application, a problem of designing an optimal adiabatic evolution path is converted into a problem of searching for an optimal state vector sequence $\vec{b}$. In this application, this permutation and combination problem is converted into an exactly equivalent "single-player game", and the Go algorithm of the AlphaZero is modified to search for an optimal "single-player game" policy. Each time the AI algorithm designs an evolution path, the adiabatic quantum computer/quantum annealing machine (for example, serving as an environment of the reinforcement learning framework) is adopted to execute the evolution path once to verify the effect of this evolution path, for example, whether a ground state (a lowest-energy quantum state) of a target Hamiltonian can be provided successfully. In this application, an energy measurement provided by the quantum hardware may be used to evaluate the quality of the path designed by the AI algorithm. In this application, it may be determined whether the design AI wins this round based on customized criteria. Through continuous interaction with the quantum computer (the AI guides the evolution of the adiabatic quantum computation and obtains real-time energy measurement feedback therefrom), the AI algorithm based on the reinforcement learning adjusts its game policy until the effectiveness meets a satisfactory level.

This application aims to search for an optimal state vector $\vec{b} = (b_1, b_2, ..., b_M)$. A value of each $b_i$ is preset to a discrete value within a specific range, that is, $b_i \in [-l, -l + \Delta, ..., l - \Delta, l]$. Therefore, as shown in FIG. 4, a selection of a group of optimal parameters $\vec{b}$ has been converted into a selection of a move position on a chessboard with a size of

$$\frac{2lM}{\Delta}$$

.

A rule of the single-player game is that each column needs to have and only have one piece (just one piece). A chessboard on which pieces are placed corresponds to a specific state vector $\vec{b}$, and an adiabatic evolution path is obtained through the formula (2). According to the formula (1), the design is performed in a quantum adiabatic computer in this application, and energy measurement is performed on the quantum system in a case that the computation is completed, to determine whether this design wins in the game. Through repeated game attempts, the AI algorithm eventually concludes best move positions for pieces on the chessboard, which means that the algorithm can find an optimal adiabatic path. In this application, this method that learns from scratch, applied to the design of a quantum adiabatic evolution path, and based on a game architecture of an MCTS in combination with a network is referred to as the "Quantum Zero".

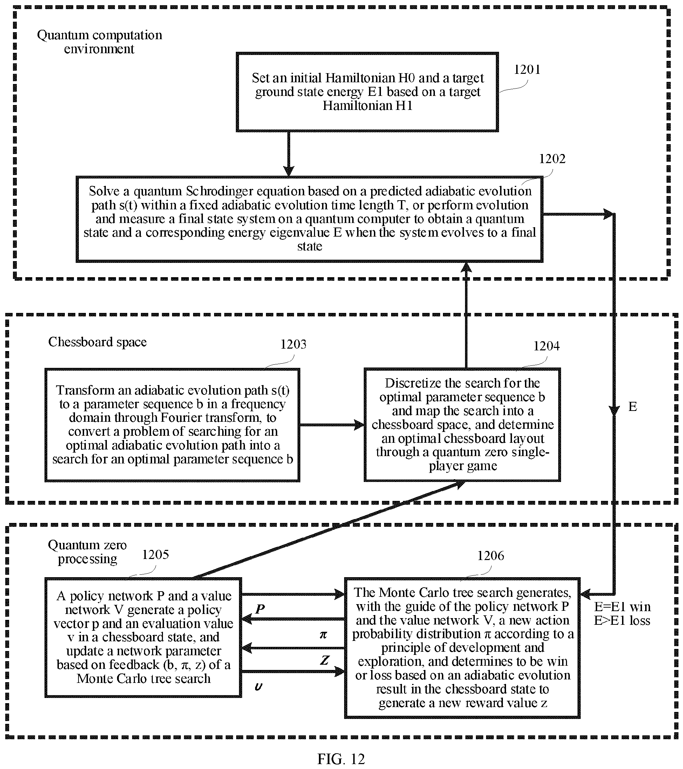

Referring to FIG. 12, the method for predicting an adiabatic evolution path provided in this application includes three parts: a quantum computation environment, a chessboard space, and quantum zero processing.

**For the quantum computation environment:**

In step 1201, an initial Hamiltonian H0 and a target ground state energy El are set based on a target Hamiltonian H1.

In step 1202, a quantum Schrodinger equation is solved based on a predicted adiabatic evolution path s(t) within a fixed adiabatic evolution time length T, or a quantum adiabatic computer performs evolution and measures a final state system to obtain a quantum state and a corresponding energy eigenvalue E when evolving to a final state.

**For the chessboard space:**

In step 1203, an adiabatic evolution path s(t) is transformed to a parameter sequence b in a frequency domain through Fourier transform, to convert a problem of searching for an optimal adiabatic evolution path into searching for an optimal parameter sequence b.

In step 1204, the searching for the optimal parameter sequence b is discretized, and is mapped into a chessboard space, and an optimal chessboard layout is found through a quantum zero single-player game.

**For the quantum zero processing:**

In step 1205, a policy network and a value network generate a policy vector p and an evaluation value v in a specific chessboard state, and update a network parameter based on feedback (b, π, z) of a Monte Carlo tree search.

The policy network and the value network generate a policy vector p and an evaluation value v in a specific chessboard state, and use the policy vector p and the evaluation value v to guide the Monte Carlo tree search. In a case that the win condition is not met, the Monte Carlo tree search uses the feedback (b, π, z) as a training sample to update the network parameter of the neural network (the policy network and the value network).

In step 1206, the Monte Carlo tree search generates, with the guide of the policy network and the value network, a new action probability distribution π according to a principle of development and exploration, and determines win or loss based on an adiabatic evolution result in the chessboard state to generate a new value reward z.

The new AI algorithm developed in this application can improve both efficiency (a shorter operation time of obtaining a result) and accuracy (higher probability of obtaining a ground state of the target Hamiltonian) of the adiabatic quantum computation, which can be demonstrated with the following two cases in this application.

In a first case, a classical problem of the quantum computation, that is, Grover search is considered. Assuming that there are n bits, and the n bits may be used to encode $2^n$ objects. In a worst case with the classical algorithm, it needs to try $2^n$ number of times. However, the quantum computer may implement secondary acceleration, that is, only $2^{n/2}$ number of times of computation are needed in this application. An adiabatic Grover search is performed to design an optimal adiabatic path for the following two given Hamiltonians H0 and H1.

$$H_0 = I - |\phi\rangle\langle\phi|, \ H_1 = I - |m\rangle\langle m|$$

where $|\phi\rangle = \frac{1}{2^{n/2}}\sum_{i=0}^{2^n-1}|i\rangle$ , I represents an identity matrix, and $|m\rangle$ represents a target binary character string.

By comparing a probability of reaching a target ground state within a time length T by using the adiabatic path designed by using the quantum zero of the Monte Carlo tree search and the reinforcement learning with that of the conventional adiabatic path (linear search), it can be seen that the quantum zero can play an important role in designing an optimal adiabatic quantum evolution path.

In a second case, considering that the 3-SAT problem, which is often discussed in computer science, is widely applied, the permutation optimization and combination problem is converted into a problem that can be handled through adiabatic quantum computation, a target Hamiltonian H1 and an initial Hamiltonian H0 are required in this application.

$$H_0 = \frac{1}{2}\sum_{i=1}^{n} h_i, \ \ h_i = \begin{pmatrix} 1 & -1 \\ -1 & 1 \end{pmatrix}$$

$$H_1 = \frac{1}{2}\sum_{\alpha=1}^{N_c}|z_1^\alpha z_2^\alpha z_3^\alpha\rangle\langle z_1^\alpha z_2^\alpha z_3^\alpha|$$

The target Hamiltonian $H_1$ includes $N_c$ logic sentences, and a limit condition of each sentence $\alpha$ is determined by three binary digits $(z_1^\alpha, z_2^\alpha, z_3^\alpha)$ . A solution to this problem is to find an n-bit value that can meet all of the $N_c$ logic sentences. In this application, 3-SAT problems that may apply a challenge to the adiabatic evolution are selected, where a target Hamiltonian has only one ground state and multiple first excited states. In the process of adiabatic evolution, the system is likely to be trapped in a state of local optimal solution, which makes the efficiency of adiabatic evolution too low. Compared a win probability of reaching a target ground state within a time length T by using the adiabatic path designed by the quantum zero using the Monte Carlo tree search and the reinforcement learning with that of the conventional adiabatic path (linear search), it can be seen that the quantum zero can play an important role in designing an optimal adiabatic quantum evolution path.

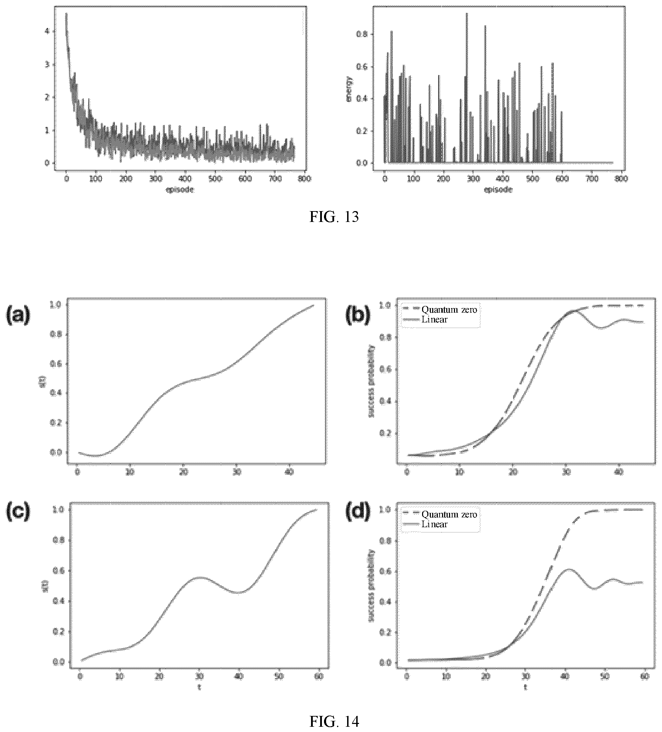

FIG. 13 shows a result of an adiabatic quantum evolution path of a 4-qubit Grover search designed by the quantum zero within an evolution time length T=45. In the left figure of FIG. 13, a wavy line located at a lower part shows an entropy outputted by the policy network P varying with the number of rounds of the quantum zero game, and a wavy line located at an upper part shows a loss function outputted by the policy network P and the value network V varying with the number of rounds of the quantum zero game. The right figure of FIG. 13 shows an energy of a final state evaluated in an evolution path designed by the quantum zero. It may be seen that, the quantum zero gradually completes the training, an optimal path within a specified evolution time is found, to obtain a target Hamiltonian ground state.

The cases of the Grover search shown in FIG. 13 are continuously described. In this application, the adiabatic evolution path designed by the quantum zero is discussed below more profoundly and is compared with the most conventional linear path. A part (a) in FIG. 14 shows an adiabatic evolution path s(t) designed by the quantum zero for a 4-qubit Grover search within an evolution time length T=45. A dotted line in a part (b) in FIG. 14 shows a probability that the target Hamiltonian ground state is provided successfully by evolving, within an adiabatic evolution time length t~(0, T), based on a path designed by the quantum zero, and a solid line shows a probability that the target Hamiltonian ground state is provided successfully by evolving, based on a linear path within an adiabatic evolution time length t~(0, T). A part (c) in FIG. 14 shows an adiabatic quantum evolution path s(t) designed by the quantum zero for a 6-qubit Grover search within an evolution time length T=60. A dotted line in a part (d) in FIG. 14 shows a probability that the target Hamiltonian ground state is provided successfully by evolving, within an adiabatic evolution time length t~(0, T), based on a path designed by the quantum zero, and a solid line shows a probability that the target Hamiltonian ground state is provided successfully by evolving based on a linear path within an adiabatic evolution time length $t\sim(0, T)$. Apparently, with the path designed by the quantum zero, a high success rate can be ensured. However, with the increase of the number of bits, a target Hamiltonian ground state cannot be provided based on the conventional linear path within a required time range T.

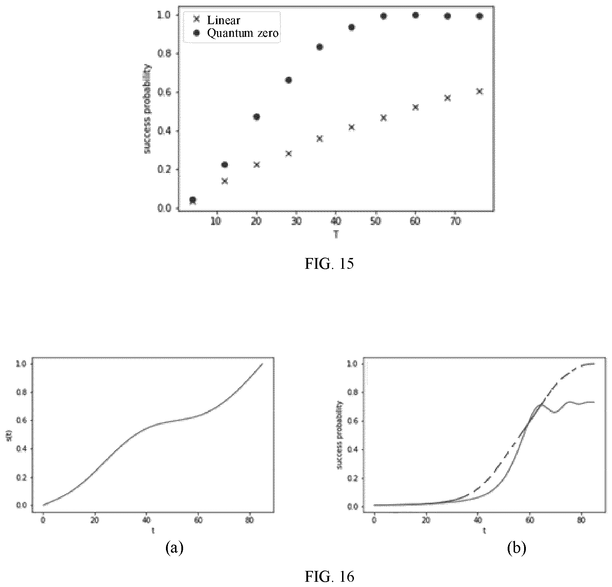

FIG. 15 shows probabilities that the target Hamiltonian ground state is provided successfully through 6-qubit Grover search for different evolution time lengths. A dot represents a probability that the target Hamiltonian ground state is provided successfully based on an evolution path designed by the quantum zero. A cross point represents a probability that the target Hamiltonian ground state is provided successfully based on a linear evolution path. Apparently, with the evolution path designed by the quantum zero, the probability of successfully providing the target Hamiltonian ground state is greatly improved through quantum adiabatic evolution.

For the case 2 mentioned in the foregoing, as the quantum zero is applied to the design of an adiabatic evolution path in the 3-SAT problem, 3-SAT problems that apply challenge to the adiabatic evolution is developed in this application: a target Hamiltonian has only one ground state and multiple first excited states. In the process of adiabatic evolution, the system is likely to be trapped in a state of local optimal solution, which makes the efficiency of adiabatic evolution too low. In this application, a 3-SAT problem including 7 qubits and 21 clauses meeting the foregoing condition and a 3-SAT problem including 11 qubits and 33 clauses meeting the foregoing condition are taken as examples, which indicate that along with gradual training of the quantum zero, an optimal path within a specified evolution time length can be stably found. Compared with the conventional adiabatic path (linear search), the success rate of reaching the target ground state within the time length T by using the adiabatic path designed by the quantum zero is apparently higher.

A part (a) in FIG. 16 shows an adiabatic quantum evolution path s(t) designed by the quantum zero for a 7-qubit 3-sat problem within an evolution time length T=85. A dotted line in a part (b) in FIG. 16 shows a probability that the target Hamiltonian ground state is provided successfully by evolving, within an adiabatic evolution time length $t\sim(0, T)$, based on a path designed by the quantum zero, and a solid line shows a probability that the target Hamiltonian ground state is provided successfully by evolving based on a linear path within an adiabatic evolution time length $t\sim(0, T)$. Apparently, the path designed by the quantum zero has better effects.

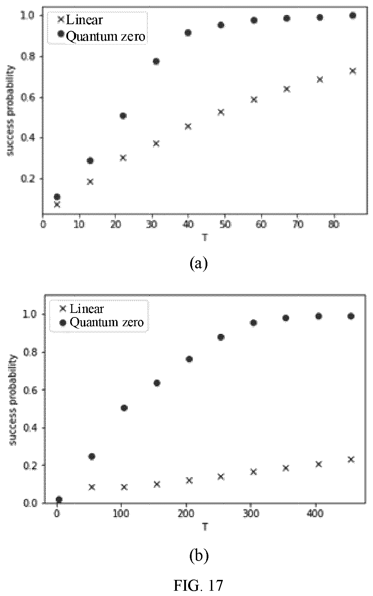

A figure (a) and a figure (b) in FIG. 17 respectively show probabilities that the target Hamiltonian ground state is provided successfully when a 7-qubit 3-sat problem and a 11-qubit 3-sat problem are considered for different evolution time lengths. A dot shows a probability that the target Hamiltonian ground state is provided successfully based on an evolution path designed by the quantum zero, and a cross point shows a probability that the target Hamiltonian ground state is provided successfully based on a linear evolution path. Apparently, the evolution path designed by the quantum zero greatly improves the probability of successfully providing the target Hamiltonian ground state through quantum adiabatic evolution.

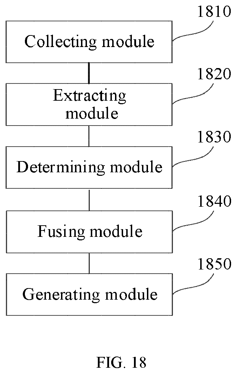

FIG. 18 is a block diagram of an apparatus for predicting an adiabatic evolution path according to an exemplary embodiment of this application. The apparatus may be implemented as all or part of an electronic computer, or may be applied to the electronic computer. The apparatus includes: an obtaining module 1810, a determination module 1820, a conversion module 1830, a tree search module 1840, and an output module 1850. The obtaining module 1810 is configured to obtain a target Hamiltonian H1 of a quantum computation problem. The determination module 1820 is configured to determine an initial Hamiltonian H0 and a target ground state energy EI based on the target Hamiltonian H1. The conversion module 1830 is configured to convert a search for an adiabatic evolution path from the initial Hamiltonian H0 to the target ground state energy EI into a chessboard game. The tree search module 1840 is configured to determine an optimal chessboard path of the chessboard game through a Monte Carlo tree search in combination with a neural network. The output module 1850 is configured to obtain the adiabatic evolution path based on the optimal chessboard path.

In an embodiment, the tree search module 1840 is further configured to: determine a predicted chessboard path of the chessboard game through the Monte Carlo tree search in combination with the neural network; obtain a predicted adiabatic evolution path based on the predicted chessboard path; calculate, based on a quantum computation environment, an energy eigenvalue E of the predicted adiabatic evolution path when the predicted adiabatic evolution path evolves to a final state; update, if the energy eigenvalue E does not meet a win condition, a parameter of the neural network based on a current prediction process, and determine a predicted chessboard path of the chessboard game through the Monte Carlo tree search in combination with the neural network again after the updating; and determine, if the energy eigenvalue E meets the win condition, the predicted chessboard path as the optimal chessboard path of the chessboard game. The win condition indicates that a difference between the energy eigenvalue E and the target ground state energy EI is less than a threshold.

In an embodiment, the neural network includes a policy network and a value network. The tree search module 1840 is further configured to: search a game tree corresponding to the chessboard game through the Monte Carlo tree search, to output an action probability distribution $\pi$ of a node at each layer, the action probability distribution $\pi$ of the node at the each layer representing a candidate move position and a probability distribution of a next piece; and obtain the predicted chessboard path of the chessboard game based on a target move position of the node at the each layer having a highest action probability distribution $\pi$. The tree search module 1840 is further configured to take, if the energy eigenvalue E does not meet the win condition, the predicted chessboard path as an input of the neural network, to obtain a policy vector p outputted by the policy network and a value benefit v outputted by the value network; and update the parameter of the neural network by aiming at maximizing a similarity between the policy vector p and the action probability distribution $\pi$ and minimizing an error between the value benefit v and a reward value z for not winning.

In an embodiment, the tree search module 1840 is configured to: output, by the policy network, a candidate move position $a_{i+1}$ and a move probability $p_{i+1}$ of a node $b_{i+1}$ at the $(i+1)^{th}$ layer following a target node $b_i$ at the $i^{th}$ layer of the chessboard game, the target node $b_i$ at the $i^{th}$ layer corresponding to a target move position of a node at the $i^{th}$ layer, i being an integer not greater than (m-1); expand the node $b_{i+1}$ at the $(i+1)^{th}$ layer based on the candidate move position $a_{i+1}$, and evaluate the node $b_{i+1}$ at the $(i+1)^{th}$ layer by the value network, to obtain a value benefit $v_{i+1}$ of each candidate move position $a_{i+1}$; determine a target node in the node $b_{i+i}$ at the $(i+1)^{th}$ layer with reference to a confidence upper limit U based on the move probability $p_{i+1}$ and the value benefit $v_{i+1}$; perform, in a case that the node at the $(i+1)^{th}$ layer is not a node at the $m^{th}$ layer, the foregoing three steps by taking the target node at the $(i+1)^{th}$ layer as a new target node of the $i^{th}$ layer; and output the action probability distribution $\pi$ of the node at the each layer in a case that the node at the $(i+1)^{th}$ layer is a node at the $m^{th}$ layer.

In an embodiment, the confidence upper limit is related to the number of times of historical searches of the candidate move position.

In an embodiment, the conversion module 1830 is further configured to express the adiabatic evolution path from the initial Hamiltonian H0 to the target ground state energy El as an adiabatic evolution function s(t); transform the adiabatic evolution function s(t) into a state vector sequence b in a frequency domain through Fourier transform, the state vector sequence b including m vector dimensions, each of the vector dimensions having a range of 2L; and obtain the chessboard game through conversion based on the number m of the vector dimensions and the value range 2L of each of the vector dimensions, a chessboard corresponding to the chessboard game including $2L/\Delta$ rows and m columns, each column corresponding to a move position of a piece, $\Delta$ representing a discretization step length.

It is to be noted that when the apparatus provided in the foregoing embodiments implements functions of the apparatus, the division of the foregoing functional modules is merely an example for description. In the practical application, the functions may be assigned to and completed by different functional modules according to the requirements, that is, the internal structure of the device is divided into different functional modules, to implement all or some of the functions described above. In addition, the apparatus and method embodiments provided in the foregoing embodiments belong to the same concept. For the specific implementation process, reference may be made to the method embodiments, and details are not described herein again.

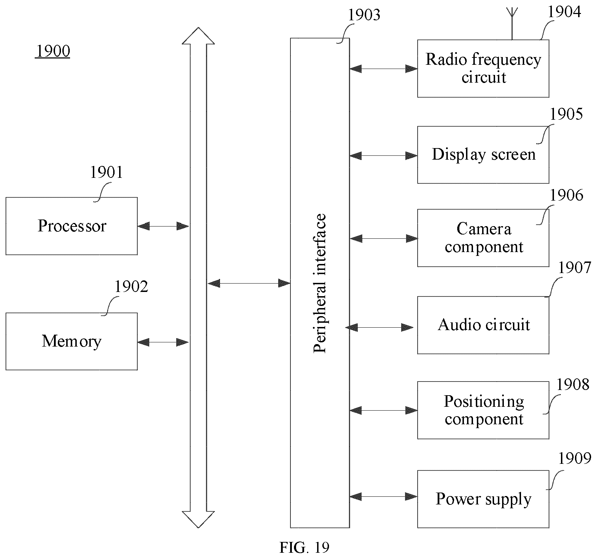

FIG. 19 is a structural block diagram of a computer device 1900 according to an embodiment of this application. The computer device 1900 may be a mobile phone, a tablet computer, a wearable device, a multimedia playback device, a camera, and another electronic device. Different from a quantum computer, the computer device 1900 is also referred to as an electronic computer.

Generally, the computer device 1900 includes a processor 1901 and a memory 1902.

The processor 1901 may include one or more processing cores. For example, the processor may be a 4-core processor or a 19-core processor. The processor 1901 may be implemented by using at least one hardware form of a digital signal processor (DSP), a field programmable gate array (FPGA), and a programmable logic array (PLA). The processor 1901 may alternatively include a main processor and a coprocessor. The main processor is configured to process data in an active state, also referred to as a central processing unit (CPU). The coprocessor is a low-power processor configured to process data in a standby state. In some embodiments, the processor 1901 may be integrated with a graphics processing unit (GPU). The GPU is configured to render and draw content that needs to be displayed on a display screen. In some embodiments, the processor 1901 may further include an Artificial Intelligence (AI) processor. The AI processor is configured to process computation operations related to machine learning.

The memory 1902 may include one or more computer-readable storage medium. The computer-readable storage medium may be non-transient. The memory 1902 may further include a high-speed random access memory and a nonvolatile memory, for example, one or more disk storage devices or flash storage devices. In some embodiments, a non-transitory computer-readable storage medium in the memory 1902 is configured to store at least one instruction, at least one program, a code set or an instruction set. The at least one instruction, the at least one program, the code set or the instruction set is configured to be executed by the processor 1901 to implement the method for predicting an adiabatic evolution path provided in the method embodiments of this application.

In some embodiments, the computer device 1900 may further include: a peripheral interface 1903 and at least one peripheral device. The processor 1901, the memory 1902, and the peripheral interface 1903 may be connected by a bus or a signal cable. Each peripheral device may be connected to the peripheral interface 1903 by using a bus, a signal cable, or a circuit board. Specifically, the peripheral device may include: at least one of a radio frequency circuit 1904, a touch display screen 1905, a camera component 1906, an audio circuit 1907, a positioning component 1908, and a power supply 1909.

The camera component 1906 may be a three-dimensional camera formed by a color camera and a depth camera.

A person skilled in the art may understand that the structure shown in FIG. 19 does not constitute any limitation on the computer device 1900, and the computer device may include more components or fewer components than those shown in Figure 19, or some components may be combined, or a different component deployment may be used.

In an exemplary embodiment, a computer-readable storage medium is further provided, which stores at least one instruction, at least one program, a code set or an instruction set. The at least one instruction, the at least one program, the code set or the instruction set is executed by a processor of a computer device to implement the foregoing method for predicting an adiabatic evolution path.

In an exemplary embodiment, a computer-readable storage medium is further provided, which stores a computer program, the computer program is executed by a processor of a computer device to implement the foregoing method for predicting an adiabatic evolution path.

Specifically, the computer-readable storage medium may include a ROM, a RAM, a solid state drive (SSD), an optical disc, or the like. The random access memory may include a resistance random access memory (ReRAM) and a dynamic random access memory (DRAM).

In an exemplary embodiment, a computer program product is further provided, the computer program product is configured to implement, when executed by a processor of a computer device, the foregoing method for predicting an adiabatic evolution path.

In an exemplary embodiment, a computer program product is further provided, the computer program product is configured to implement, when executed by a processor of a terminal, the foregoing method for predicting an adiabatic evolution path.

It is to be understood that "multiple" mentioned in this specification means two or more. "And/or" describes an association relationship for associated objects and represents that three relationships may exist. For example, A and/or B may represent the following three cases: only A exists, both A and B exist, and only B exists. The character "/" generally indicates an "or" relationship between the associated objects. In addition, the step numbers described in this specification merely exemplarily show a possible execution sequence of the steps. In some other embodiments, the steps may not be performed in the number sequence. For example, two steps with different numbers may be performed simultaneously, or two steps with different numbers may be performed in a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A method for predicting an adiabatic evolution path, the method being applied to a computer device, and comprising:

   obtaining a target Hamiltonian H1 of a quantum computation problem;
   determining an initial Hamiltonian H0 and a target ground state energy El based on the target Hamiltonian HI;
   converting a search for an adiabatic evolution path from the initial Hamiltonian H0 to the target ground state energy El into a chessboard game;
   determining an optimal chessboard path of the chessboard game through a Monte Carlo tree search in combination with a neural network; and
   outputting the adiabatic evolution path based on the optimal chessboard path.

2. The method according to claim 1, wherein the determining an optimal chessboard path of the chessboard game through a Monte Carlo tree search in combination with a neural network comprises:

   determining a predicted chessboard path of the chessboard game through the Monte Carlo tree search in combination with the neural network;
   obtaining a predicted adiabatic evolution path based on the predicted chessboard path;
   calculating, based on a quantum computation environment, an energy eigenvalue E of the predicted adiabatic evolution path when the predicted adiabatic evolution path evolves to a final state;
   updating, if the energy eigenvalue E does not meet a win condition, a parameter of the neural network based on a current prediction process, and performing the step of determining a predicted chessboard path of the chessboard game through the Monte Carlo tree search in combination with the neural network again after the updating; and
   determining, if the energy eigenvalue E meets the win condition, the predicted chessboard path as the optimal chessboard path of the chessboard game, wherein
the win condition indicates that a difference between the energy eigenvalue E and the target ground state energy El is less than a threshold.

3. The method according to claim 2, wherein the neural network comprises a policy network and a value network, and

the determining a predicted chessboard path of the chessboard game through the Monte Carlo tree search in combination with the neural network comprises:

searching a game tree corresponding to the chessboard game through the Monte Carlo tree search, to output an action probability distribution $\pi$ of a node at each layer, the action probability distribution $\pi$ of the node at each layer representing a candidate move position and a probability distribution of a next piece; and obtaining the predicted chessboard path of the chessboard game based on a target move position of the node at each layer having a highest action probability distribution $\pi$, and

the updating, if the energy eigenvalue E does not meet a win condition, a parameter of the neural network based on a current prediction process comprises:

taking, if the energy eigenvalue E does not meet the win condition, the predicted chessboard path as an input of the neural network, to obtain a policy vector p outputted by the policy network and a value benefit v outputted by the value network; and
updating the parameter of the neural network by aiming at maximizing a similarity between the policy vector p and the action probability distribution $\pi$ and minimizing an error between the value benefit v and a reward value z for not winning.

4. The method according to claim 3, wherein the searching a game tree corresponding to the chessboard game through the Monte Carlo tree search to output an action probability distribution $\pi$ of a node at each layer comprises:

outputting, by the policy network, a candidate move position $a_{i+1}$ and a move probability $p_{i+1}$ of a node $b_{i+1}$ at an $(i+1)^{th}$ layer following a target node $b_i$ at the $i^{th}$ layer of the chessboard game, the target node $b_i$ at the $i^{th}$ layer corresponding to a target move position of a node at the $i^{th}$ layer, i being an integer not greater than (m-1); expanding the node $bi+i$ at the $(i+1)^{th}$ layer based on the candidate move position $a_{i+1}$, and evaluating the node $b_{i+1}$ at the $(i+1)^{th}$ layer by the value network, to obtain a value benefit $v_{i+1}$ of the candidate move position $a_{i+1}$; determining a target node in the node $b_{i+1}$ at the $(i+1)^{th}$ layer with reference to a confidence upper limit U based on the move probability $p_{i+1}$ and the value benefit $v_{i+1}$;
performing, in a case that the node at the $(i+1)^{th}$ layer is not a node at the $m^{th}$ layer, the foregoing three steps by taking the target node at the $(i+1)^{th}$ layer as a new target node of the $i^{th}$ layer; and
outputting the action probability distribution $\pi$ of the node at each layer in a case that the node at the $(i+1)^{th}$ layer is a node at the $m^{th}$ layer.

5. The method according to claim 4, wherein the confidence upper limit is related to the number of times of historical searches of the candidate move position.

6. The method according to any one of claims 1 to 5, wherein the converting a search for an adiabatic evolution path from the initial Hamiltonian H0 to the target ground state energy El into a chessboard game comprises:

expressing the adiabatic evolution path from the initial Hamiltonian H0 to the target ground state energy El as an adiabatic evolution function s(t);
transforming the adiabatic evolution function s(t) into a state vector sequence b in a frequency domain through Fourier transform, the state vector sequence b comprising m vector dimensions, each of the vector dimensions having a range of 2L; and
obtaining the chessboard game through conversion based on the number m of the vector dimensions and the range 2L of each of the vector dimensions, a chessboard corresponding to the chessboard game comprising 2L/$\Delta$ rows and m columns, each column corresponding to a move position of a piece, $\Delta$ representing a discretization step length.

7. An apparatus for predicting an adiabatic evolution path, comprising:

an obtaining module, configured to obtain a target Hamiltonian H1 of a quantum computation problem;
a determination module, configured to determine an initial Hamiltonian H0 and a target ground state energy EI based on the target Hamiltonian H1;
a conversion module, configured to convert a search for an adiabatic evolution path from the initial Hamiltonian H0 to the target ground state energy EI into a chessboard game; and
a tree search module, configured to determine an optimal chessboard path of the chessboard game through a Monte Carlo tree search in combination with a neural network; and
output the adiabatic evolution path based on the optimal chessboard path.

8. The apparatus according to claim 7, wherein the tree search module is further configured to:

determine a predicted chessboard path of the chessboard game through the Monte Carlo tree search in combination with the neural network;
obtain a predicted adiabatic evolution path based on the predicted chessboard path;
calculate, based on a quantum computation environment, an energy eigenvalue E of the predicted adiabatic evolution path when the predicted adiabatic evolution path evolves to a final state;
update, if the energy eigenvalue E does not meet a win condition, a parameter of the neural network based on a current prediction process, and determine a predicted chessboard path of the chessboard game through the Monte Carlo tree search in combination with the neural network again after the updating; and
determine, if the energy eigenvalue E meets the win condition, the predicted chessboard path as the optimal chessboard path of the chessboard game, wherein
the win condition indicates that a difference between the energy eigenvalue E and the target ground state energy EI is less than a threshold.

9. The apparatus according to claim 8, wherein the neural network comprises a policy network and a value network, and

the tree search module is further configured to:

search a game tree corresponding to the chessboard game through the Monte Carlo tree search, to output an action probability distribution $\pi$ of a node at each layer, the action probability distribution $\pi$ of the node at the each layer representing a candidate move position and a probability distribution of a next piece; and
obtain the predicted chessboard path of the chessboard game based on a target move position of the node at the each layer having a highest action probability distribution $\pi$, and

the tree search module is further configured to:

take, if the energy eigenvalue E does not meet the win condition, the predicted chessboard path as an input of the neural network, to obtain a policy vector p outputted by the policy network and a value benefit v outputted by the value network; and
update the parameter of the neural network by aiming at maximizing a similarity between the policy vector p and the action probability distribution $\pi$ and minimizing an error between the value benefit v and a reward value z for not winning.

10. The apparatus according to claim 9, wherein the tree search module is further configured to:

output, by the policy network, a candidate move position $a_{i+1}$ and a move probability $p_{i+1}$ of a node $b_{i+1}$ at an $(i+1)^{th}$ layer following a target node $b_i$ at the $i^{th}$ layer of the chessboard game, the target node $b_i$ at the $i^{th}$ layer corresponding to a target move position of a node at the $i^{th}$ layer, i being an integer not greater than (m-1);
expand the node $b_{i+1}$ at the $(i+1)^{th}$ layer based on the candidate move position $a_{i+1}$, and evaluate the node $b_{i+1}$ at the $(i+1)^{th}$ layer by the value network, to obtain a value benefit $v_{i+1}$ of the candidate move position $a_{i+1}$;
determine a target node in the node $b_{i+1}$ at the $(i+1)^{th}$ layer with reference to a confidence upper limit U based on the move probability pi+i and the value benefit $v_{i+1}$;
perform, in a case that the node at the $(i+1)^{th}$ layer is not a node at the $m^{th}$ layer, the foregoing three steps by taking the target node at the $(i+1)^{th}$ layer as a new target node of the $i^{th}$ layer; and
output the action probability distribution $\pi$ of the node at the each layer in a case that the node at the $(i+1)^{th}$ layer is a node at the $m^{th}$ layer.

11. The apparatus according to claim 10, wherein the confidence upper limit is related to the number of times of historical searches of the candidate move position.

12. The apparatus according to any one of claims 7 to 11, wherein the conversion module is further configured to:

express the adiabatic evolution path from the initial Hamiltonian H0 to the target ground state energy El as an adiabatic evolution function s(t);
transform the adiabatic evolution function s(t) into a state vector sequence b in a frequency domain through Fourier transform, the state vector sequence b comprising m vector dimensions, each of the vector dimensions having a range of 2L; and
obtain the chessboard game through conversion based on the number m of the vector dimensions and the value range 2L of each of the vector dimensions, a chessboard corresponding to the chessboard game comprising $2L/\Delta$ rows and m columns, each column corresponding to a move position of a piece, $\Delta$ representing a discretization step length.

13. A computer device, comprising:

a memory, configured to store at least one instruction, at least one program, a code set or an instruction set; and
a processor, configured to load and execute the at least one instruction, the at least one program, the code set or the instruction set to implement the method according to any one of claims 1 to 6.

14. A quantum computer, configured to perform adiabatic evolution based on an adiabatic evolution path predicted by the method according to any one of claims 1 to 6.

15. A computer-readable storage medium, storing at least one instruction, at least one program, a code set or an instruction set, wherein
the at least one instruction, the at least one program, the code set or the instruction set is loaded and executed by a processor to implement the method according to any one of claims 1 to 6.

FIG. 1

Obtain a target Hamiltonian H1 of a quantum computation problem — 201

Determine an initial Hamiltonian H0 and a target ground state energy E1 based on the target Hamiltonian H1 — 202

Convert a search for an adiabatic evolution path from the initial Hamiltonian H0 to the target ground state energy E1 into a chessboard game — 203

Determine an optimal chessboard path of the chessboard game through a Monte Carlo tree search in combination with a neural network — 204

Output the adiabatic evolution path based on the optimal chessboard path — 205

FIG. 2

| Express the adiabatic evolution path from the initial Hamiltonian H0 to the target ground state energy E1 as an adiabatic evolution function s(t) | 203a |

| Transform the adiabatic evolution function s(t) into a state vector sequence $\vec{b}$ in a frequency domain through Fourier transform, the state vector sequence $\vec{b}$ including m vector dimensions, each of the vector dimensions having a range of 2L | 203b |

| Obtain a chessboard game through conversion based on the number m of the vector dimensions and the range 2L of each of the vector dimensions | 203c |

FIG. 3

FIG. 4

Determine a predicted chessboard path of the chessboard game through the Monte Carlo tree search in combination with the neural network — 204a

Obtain a predicted adiabatic evolution path based on the predicted chessboard path — 204b

Calculate, based on a quantum computation environment, an energy eigenvalue E of the predicted adiabatic evolution path when the predicted adiabatic evolution path evolves to a final state — 204c

Is E greater than E1? — 204d

Yes

No

Update a parameter of the neural network based on the energy eigenvalue E — 204e

Determine the predicted chessboard path as the optimal chessboard path of the chessboard game — 204f

FIG. 5

FIG. 6

1. Selection

2. Expansion

3. Simulation

4. Backpropagation

FIG. 7

p

Feature extraction network → Policy network P → Monte Carlo tree search

Feature extraction network → Value network V → Monte Carlo tree search

v

(b, π, z)

π

Quantum computation environment

FIG. 8

Search a game tree corresponding to the chessboard game through the Monte Carlo tree search to output an action probability distribution π of a node at each layer, the action probability distribution π of the node node at the each layer representing a candidate move position and a probability distribution of a next piece — 204a-1

Obtain the predicted chessboard path of the chessboard game based on a target move position of the node at the each layer having a highest action probability distribution π — 204a-2

Obtain a predicted adiabatic evolution path based on the predicted chessboard path — 204b

Calculate, Based on a quantum computation environment, an energy eigenvalue E of the predicted adiabatic evolution path when the predicted adiabatic evolution path evolves to a final state — 204c

204d

Is E greater than E1?

Yes

No

204e-1

Take the predicted chessboard path as an input of the neural network, to obtain a policy vector p outputted by the policy network and a value benefit v outputted by the value network

204f

Determine the predicted chessboard path as the optimal chessboard path of the chessboard game

204e-2

Update the parameter of the neural network by aiming at maximizing a similarity between the policy vector p and the action probability distribution π and minimizing an error between the value benefit v and a reward value z for not winning

FIG. 9

Output, by the policy network, a candidate move position $a_{i+1}$ and a move probability $p_{i+1}$ of a node $b_{i+1}$ at the $(i+1)^{th}$ layer following a target node $b_i$ at the $i^{th}$ layer of the chessboard game

1

Expand the node $b_{i+1}$ at the $(i+1)^{th}$ layer based on the candidate move position $a_{i+1}$, and evaluate the node $b_{i+1}$ at the $(i+1)^{th}$ layer by using the value network, to obtain a value benefit $v_{i+1}$ of each candidate move position $a_{i+1}$

2

Output the action probability distribution $\pi$ of the node at the each layer in a case that the node at the $(i+1)^{th}$ layer is a node at the $m^{th}$ layer

5

Determine a target node in the node $b_{i+1}$ at the $(i+1)^{th}$ layer with reference to a confidence upper limit U based on the move probability $p_{i+1}$ and the value benefit $v_{i+1}$

3

4

Perform, in a case that the node at the $(i+1)^{th}$ layer is not a node at the $m^{th}$ layer, the foregoing three steps by taking the target node at the $(i+1)^{th}$ layer as a new target node of the $i^{th}$ layer

FIG. 10

FIG. 11

**Quantum computation environment**

Set an initial Hamiltonian H0 and a target ground state energy E1 based on a target Hamiltonian H1    1201

Solve a quantum Schrodinger equation based on a predicted adiabatic evolution path s(t) within a fixed adiabatic evolution time length T, or perform evolution and measure a final state system on a quantum computer to obtain a quantum state and a corresponding energy eigenvalue E when the system evolves to a final state    1202

**Chessboard space**    1203    1204

Transform an adiabatic evolution path s(t) to a parameter sequence b in a frequency domain through Fourier transform, to convert a problem of searching for an optimal adiabatic evolution path into a search for an optimal parameter sequence b

Discretize the search for the optimal parameter sequence b and map the search into a chessboard space, and determine an optimal chessboard layout through a quantum zero single-player game

E

**Quantum zero processing**    1205    1206

A policy network P and a value network V generate a policy vector p and an evaluation value v in a chessboard state, and update a network parameter based on feedback (b, π, z) of a Monte Carlo tree search

$P$

$\pi$

$Z$

$v$

The Monte Carlo tree search generates, with the guide of the policy network P and the value network V, a new action probability distribution π according to a principle of development and exploration, and determines to be win or loss based on an adiabatic evolution result in the chessboard state to generate a new reward value z

E=E1 win
E>E1 loss

FIG. 12

FIG. 13

FIG. 14

FIG. 15

(a)

(b)

FIG. 16

(a)

(b)

FIG. 17

1810

Collecting module

1820

Extracting
module

1830

Determining module

1840

Fusing module

1850

Generating module

FIG. 18

1900

1903

1904

Radio frequency
circuit

1905

Display screen

1906

Camera
component

1907

1901

Processor

Peripheral interface

Audio circuit

1902

1908

Memory

Positioning
component

1909

Power supply

FIG. 19

| INTERNATIONAL SEARCH REPORT | International application No. |
|---|---|
| | **PCT/CN2020/124440** |

**A. CLASSIFICATION OF SUBJECT MATTER**

G06N 99/00(2019.01)i

According to International Patent Classification (IPC) or to both national classification and IPC

**B. FIELDS SEARCHED**

Minimum documentation searched (classification system followed by classification symbols)

G06F; G06N

Documentation searched other than minimum documentation to the extent that such documents are included in the fields searched

Electronic data base consulted during the international search (name of data base and, where practicable, search terms used)

CNABS; CNTXT; DWPI; SIPOABS; CNKI: 量子, 博弈, 神经网络, 绝热, 演化, 棋盘, 哈密顿, 蒙特卡洛, Monte Carlo, hamiltion, quantum, game, board, compute?, adiabatic+, evolution, neural network

**C. DOCUMENTS CONSIDERED TO BE RELEVANT**

| Category* | Citation of document, with indication, where appropriate, of the relevant passages | Relevant to claim No. |
|---|---|---|
| A | CN 107851218 A (D-WAVE SYSTEMS INC.) 27 March 2018 (2018-03-27)<br>entire document | 1-15 |
| A | US 7418283 B2 (D WAVE SYS INC.) 26 August 2008 (2008-08-26)<br>entire document | 1-15 |
| A | CN 108694440 A (NANJING UNIVERSITY OF POSTS AND TELECOMMUNICATIONS)<br>23 October 2018 (2018-10-23)<br>entire document | 1-15 |
| A | EP 2729903 B1 (D WAVE SYSTEMS INC.) 01 April 2020 (2020-04-01)<br>entire document | 1-15 |
| A | CN 108713206 A (MICROSOFT TECHNOLOGY LICENSING LLC.) 26 October 2018<br>(2018-10-26)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 January 2021** | **10 February 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/124440**

| Patent document cited in search report | | | Publication date (day/month/year) | Patent family member(s) | | | Publication date (day/month/year) |
|---|---|---|---|---|---|---|---|
| CN | 107851218 | A | 27 March 2018 | WO | 2016182608 | A3 | 05 January 2017 |
| | | | | WO | 2016182608 | A2 | 17 November 2016 |
| | | | | US | 2018246848 | A1 | 30 August 2018 |
| US | 7418283 | B2 | 26 August 2008 | US | 2005224784 | A1 | 13 October 2005 |
| | | | | WO | 2005093649 | A1 | 06 October 2005 |
| | | | | US | 2008086438 | A1 | 10 April 2008 |
| | | | | US | 2005250651 | A1 | 10 November 2005 |
| | | | | US | 7135701 | B2 | 14 November 2006 |
| | | | | US | 2005256007 | A1 | 17 November 2005 |
| CN | 108694440 | A | 23 October 2018 | | None | | |
| EP | 2729903 | B1 | 01 April 2020 | WO | 2013006836 | A1 | 10 January 2013 |
| | | | | CA | 2840958 | A1 | 10 January 2013 |
| | | | | US | 10467543 | B2 | 05 November 2019 |
| | | | | EP | 2729903 | A1 | 14 May 2014 |
| | | | | EP | 2729903 | A4 | 29 July 2015 |
| | | | | US | 2014187427 | A1 | 03 July 2014 |
| | | | | US | 2016042294 | A1 | 11 February 2016 |
| | | | | US | 9218567 | B2 | 22 December 2015 |
| | | | | CA | 2840958 | C | 27 March 2018 |
| | | | | EP | 3745322 | A1 | 02 December 2020 |
| CN | 108713206 | A | 26 October 2018 | WO | 2017143195 | A1 | 24 August 2017 |
| | | | | US | 2020193302 | A1 | 18 June 2020 |
| | | | | EP | 3417403 | A1 | 26 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010027656